# EUROPEAN PATENT SPECIFICATION

(11) **EP 1 296 073 B1**
(45) Date of publication and mention of the grant of the patent: **02.11.2006**
(21) Application number: 02020610.8
(22) Date of filing: 13.09.2002
(51) Int. Cl.: F16C 3/02, F16F 15/32

(54) **Method and apparatus for balancing driveshafts**
Verfahren und Vorrichtung zum Auswuchten von Antriebswellen
Procédé et dispositif pour équilibrer des arbres de transmission

(30) Priority: 13.09.2001 US 951205
(43) Date of publication of application: 26.03.2003
(73) Proprietor: AMERICAN AXLE & MANUFACTURING INC., Detroit, Michigan 48212 (US)
(72) Inventor: Barrett, Mark S., Orion, Michigan 48359 (US); Sivakumar, Karthik, Rochester Hills, Michigan 48307 (US); Menosky, Marc M., Burt, Michigan 48417 (US)
(74) Representative: Otten, Hajo

(56) References cited:
- EP-A- 0 056 306
- US-A- 5 165 305
- US-A- 5 214 585

## Description

### FIELD AND BACKGROUND OF THE INVENTION

The present invention relates to driveshafts and, more particularly, to a method and an apparatus for balancing the rotational imbalance of a driveshaft.

Balancing of automotive drivelines is critical to provide optimum performance of the automotive vehicle. Ordinarily, a driveshaft for the driveline is formed by a roll formed tube which includes yokes welded at each end. The yokes receive universal joints to be connected with other components. The tube, although manufactured to tight tolerances, will not be uniformly cylindrical, in cross-section, or absolutely straight throughout its length. The tube will have irregularity in its wall thickness. Similarly, irregularities appear in the cast or forged yokes which are connected to the tube. The material in geometrical variations will provide an incongruent mass and rotational centers causing eccentric loading imbalance. This may lead to vibration and vehicle noise which will be amplified by the constant whipping of the unbalanced weight distribution of the driveline.

In order to balance the steel driveshafts and yoke, ordinarily a small weight is welded to the steel tubes or preferably to the end of the tubes adjacent the overlap of the yokes. Also, adhesive metallic tape had been utilized in an attempt to balance driveshafts. Further, riveted pads, which pierce the wall of the drive tubes, have been used. Disadvantages of the above is that the adhesive bond may become contaminated and fail. Also, the piercing of the tube creates an unsealed tube which violates automotive requirements. Thus, welding balancing weights onto the tube is the predominant technique.

With the advent of aluminum or aluminum base driveshafts, the welding of material cannot be used since the steel weights do not weld or braise to the aluminum material. Less dense weights, such as aluminum weights, which would weld to the aluminum, are used. However, the size and mass of proper distribution of weight made their use difficult. Thus, using the dissimilar metals on an aluminum driveshaft assembly remains a difficult process.

Document EP 0 056 306 A2 discloses a shaft comprising an end fitting such as the yoke of a Hooke's joint, welded to a tubular member, both these components being of an aluminum alloy and the end fitting carrying, on a spigot thereof, a steel sleeve to which balance weights can be spot welded. As an alternative to the attachment of balance weights to the steel sleeve, it is possible to remove part of the sleeve, e.g. by an appropriate machining operation, in order to balance the shaft.

It is the object of the invention to provide an improved drive shaft and an improved method of balancing a drive shaft.

These object is achieved by a drive shaft with the features of claim 1 and by a method of balancing a drive shaft with the features of claim 6.

Preferred embodiments can be found in the subclaims.

The present invention overcomes the drawbacks of the prior art. The present invention provides an assembly where, instead of adding material, material is removed to balance the driveshaft. The yokes include a portion which enables removal of material or mass to balance the rotational imbalance.

From the following detailed description, taken in conjunction with the drawings and subjoined claims, other objects and advantages of the present invention will become apparent to those skilled in the art.

Figure 1 is a schematic view of a driveline of a vehicle including a driveshaft in accordance with the present invention.

Figure 2 is a plan view of a driveline assembly in accordance with the present invention.

Figure 3 is an enlarged partial section view of an end of the driveshaft of Figure 2.

### DETAILED DESCRIPTION OF THE PREFERRED EMBODIMENTS

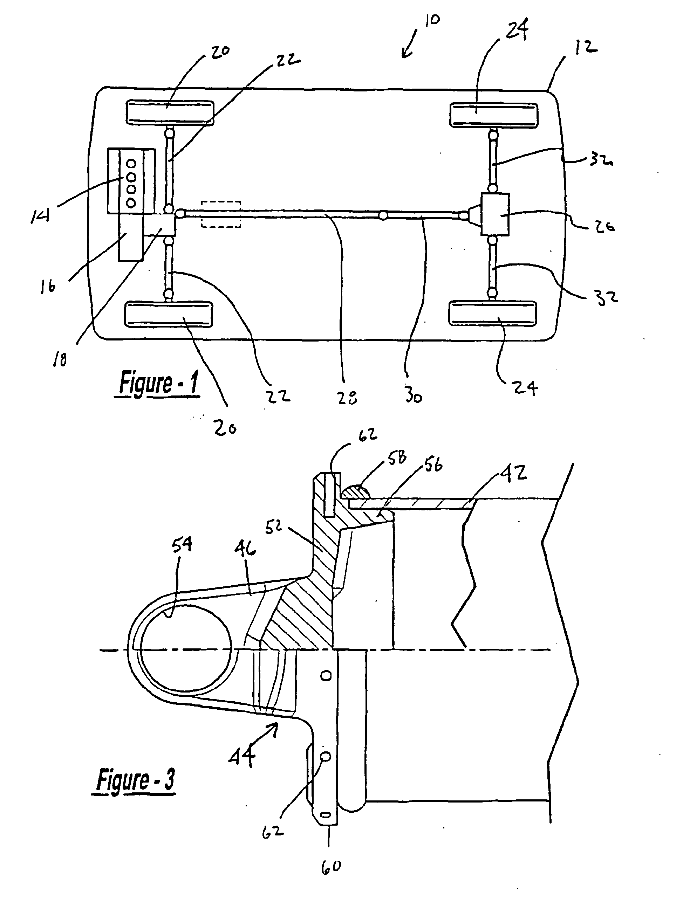

Turning to the figures, particularly Figure 1, a driveline is illustrated and designated with the reference numeral 10. The driveline 10 is that of a four-wheel vehicle 12. The vehicle 12 includes an engine 14 with a gear box 16 and a front axle differential 18. The front wheels 20 are driven via front driveshafts 22. The driving torque for the rear wheels 24 is branched off from the front axle differential 18 and transmitted to the rear axle differential 26 via a divided longitudinal driveshaft 28 and 30. Via the rear driveshafts 32, the rear axle differential 26 drives the rear wheels 24. The front and rear driveshafts 22, 32, as well as the divided longitudinal driveshaft 28, 30, may be designed in accordance with the invention.

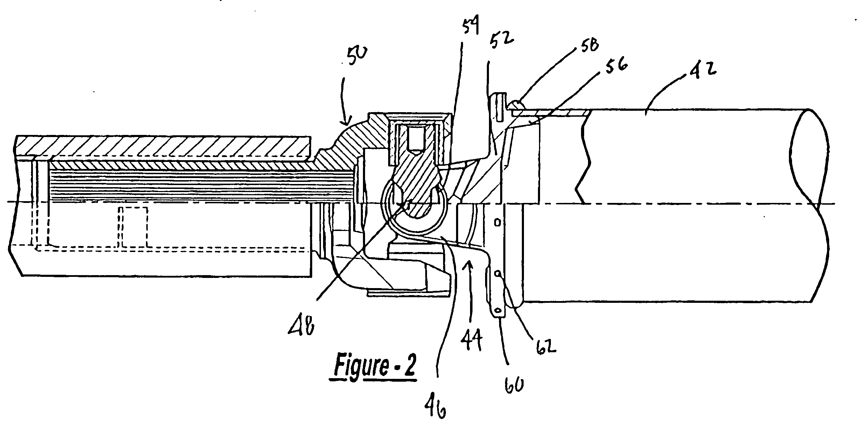

Turning to Figure 2, a driveshaft is illustrated. The driveshaft includes a tubular portion 42 which has two ends. Each end includes a yoke 44 which is welded to the tube 42. Also, the yokes 44 include ears 46 which receive the universal joint 48. The universal joint 48 is coupled with a second yoke 50.

The tube 42 may be steel or aluminum. The tube 42 has a desired diameter as well as tube thickness. While the tube 42 is manufactured within tight tolerances, discontinuities exist along the circumferential cross-section as well as along the longitudinal axis of the tube 42. The variations of the thickness of the tube 42 is what causes rotational imbalances.

The yoke 44 includes a body 52. The ears 46 project from the body 52. The ears include cross-holes 54 which receive the bearing assembly of the universal joint 48. A skirt portion 56 projects from the other side of the body 52. The skirt portion 56 is inserted inside of the tube 42. The tube 42 is then welded via weld 58 to the yoke 44.

The yoke body 52 includes a flange portion 60. The flange 60 circumferentially surrounds the body 52. The flange 60 radially projects beyond the diameter of the tube 42. The flange 60, as shown, includes at least one bore 62. The bore 62 could be replaced by a ground portion or the bore 62 could be a notched or cut portion. The removal of material from the flange 60 which forms the bore 62 is provided to balance the rotation of the driveshaft. By removing material from the flange 60, a rotational balance may be achieved in the driveshaft. Thus, the present invention eliminates the need for adding material to the driveshaft or yoke 44. Thus, the disadvantages which are present in adding material to the driveshaft are removed.

The driveshaft of the present invention is balanced as follows. A tubular member 42 is provided. Yoke members 44 are coupled or welded to the ends of the tubular member 42. The yoke members 44 include flanges 40 like those described. The driveshaft is rotated at a desired speed. As the driveshaft is rotated, vibrational imbalance can be determined. After the vibrational imbalance is determined, a position is indicated as to where and how much material is to be removed. The material is removed from the flange 60 by cutting, boring or grinding the material from the flange 60. After this occurs, the driveshaft is rotated again to determine that rotational balance has been achieved. If a rotational imbalance would exist, the above process would be repeated.

## Claims

1. A driveshaft comprising a tubular element (42) having two ends, at least one yoke (44) coupled with one end of said tubular element (42), said at least one yoke (44) including a stub shaft portion (56) for coupling with said tubular element (42), and a receiving portion (46) for receiving a joint (48),
comprising a balancing portion (60) for balancing shaft rotation, said balancing portion (60) including a desired mass of material, wherein said balancing portion (60) enables mass reduction so that mass is removed from said balancing portion (60) so that rotational imbalance of said driveshaft (22, 28, 30, 32) during rotation, being eliminated,
**characterized in that** the balancing portion (60) is integrally formed with the yoke (44).

2. The driveshaft of claim 1, **characterized in that** a yoke (44) is at each end of said driveshaft (22, 28, 30, 32).

3. The driveshaft of claim 1 or claim 2, **characterized in that** said balancing portion (60) is positioned between said stub shaft portion (56) and said receiving portion (46).

4. The driveshaft of anyone of claims 1 - 3, **characterized in that** said balancing portion (60) is a circumferential flange (60).

5. The driveshaft of claim 4, **characterized in that** said circumferential flange (60) may be bored, ground, cut, or the like to remove material from said flange (60).

6. A method of balancing a driveshaft (22, 28, 30, 32), comprising the steps of:
providing a driveshaft (22, 28, 30, 32) having a tubular element (42) with two ends and a yoke (44) coupled at each end of said tubular element (42),
directly removing material from at least one of said yokes (44), and
balancing rotational imbalance of said driveshaft (22, 28, 30, 32) through said removal of material from said at least one yoke (44).

7. The method of claim 6, **characterized by** providing a flange (60) on said at least one yoke (44).

8. The method of claim 7, **characterized by** removing material from said flange (60).

9. The method of claim 7 or claim 8, **characterized by** boring, grinding, cutting or the like, said flange (60) for removing said material.

## Patentansprüche

1. Antriebswelle mit einem rohrförmigen Element (42), das zwei Enden aufweist, wenigstens einer Gabel (44), die mit einem Ende des rohrförmigen Elementes (42) gekoppelt ist, wobei die wenigstens eine Gabel (44) einen Stummelwellenabschnitt (56) aufweist, und zwar zum Zwecke der Kopplung mit dem rohrförmigen Element (42), und einen Aufnahmeabschnitt (46) zum Aufnehmen eines Gelenkes (48) aufweist,
mit einem Auswuchtabschnitt (60) zum Auswuchten einer Wellendrehung, wobei der Auswuchtabschnitt (60) eine gewünschte Masse aus Material beinhaltet, wobei der Auswuchtabschnitt (60) eine Massenverringerung ermöglicht, derart, dass Masse von dem Auswuchtabschnitt (60) entfernt wird, derart, dass eine Unwucht der Antriebswelle (22, 28, 30, 32) während der Drehung eliminiert wird,
**dadurch gekennzeichnet, dass** der Auswuchtabschnitt (60) einstückig mit der Gabel (44) ausgebildet ist.

2. Antriebswelle nach Anspruch 1, **dadurch gekennzeichnet, dass** sich an jedem Ende der Antriebswelle (22, 28, 30, 32) eine Gabel (44) befindet.

3. Antriebswelle nach Anspruch 1 oder nach Anspruch 2, **dadurch gekennzeichnet, dass** der Auswuchtabschnitt (60) zwischen dem Stummelwellenabschnitt (56) und dem Aufnahmeabschnitt (46) angeordnet ist.

4. Antriebswelle nach einem der Ansprüche 1 - 3, **dadurch gekennzeichnet, dass** der Auswuchtabschnitt (60) ein umfänglicher Flansch (60) ist.

5. Antriebswelle nach Anspruch 4, **dadurch gekennzeichnet, dass** der umfängliche Flansch (60) angebohrt, geschliffen, angeschnitten oder dgl. werden kann, um Material von dem Flansch (60) zu entfernen.

6. Verfahren zum Auswuchten einer Antriebswelle (22, 28, 30, 32), mit den Schritten:
Bereitstellen einer Antriebswelle (22, 28, 30, 32), die ein rohrförmiges Element (42) mit zwei Enden aufweist, wobei an jedem Ende des rohrförmigen Elementes (42) eine Gabel (44) angeschlossen ist,
direktes Entfernen von Material von wenigstens einer der Gabeln (44), und
Auswuchten einer Unwucht der Antriebswelle (22, 28, 30, 32) durch das Entfernen von Material von der wenigstens einen Gabel (44).

7. Verfahren nach Anspruch 6, **gekennzeichnet durch** Bereitstellen eines Flansches (60) an der wenigstens einen Gabel (44).

8. Verfahren nach Anspruch 7, **gekennzeichnet durch** Entfernen von Material von dem Flansch (60).

9. Verfahren nach Anspruch 7 oder 8, **gekennzeichnet durch** Anbohren, Schleifen, Anschneiden oder dgl. des Flansches (60) zum Entfernen des Materials.

## Revendications

1. Arbre de transmission comprenant un élément tubulaire (42) possédant deux extrémités, au moins une fourche (44) couplée à une extrémité dudit élément tubulaire (42), ladite au moins une fourche (44) comprenant une partie de faux arbre (56) pour un accouplement avec ledit élément tubulaire (42) et une partie de réception (46) pour recevoir un joint (48),
comprenant une partie d'équilibrage (60) pour équilibrer l'arbre en rotation, ladite partie d'équilibrage (60) comprenant une masse désirée de matériau, dans lequel ladite partie d'équilibrage (60) permet une réduction de masse de façon à ce que de la masse soit enlevée de ladite partie d'équilibrage (60) afin d'éliminer un balourd en rotation dudit arbre de transmission rotatif (22, 28, 30, 32),
**caractérisé en ce que** la partie d'équilibrage (60) est formée d'une pièce avec la fourche (44).

2. Arbre de transmission selon la revendication 1, **caractérisé en ce qu'**une fourche (44) est prévue à chaque extrémité dudit arbre de transmission (22, 28, 30, 32).

3. Arbre de transmission selon la revendication 1 ou 2, **caractérisé en ce que** ladite partie d'équilibrage (60) est positionnée entre ladite partie de faux arbre (56) et ladite partie de réception (46).

4. Arbre de transmission selon l'une quelconque des revendications 1 à 3, **caractérisé en ce que** ladite partie d'équilibrage (60) est un flasque de circonférence (60).

5. Arbre de transmission selon la revendication 4, **caractérisé en ce que** ledit flasque de circonférence (60) peut être percé, meulé, découpé ou similaire pour enlever du matériau dudit flasque (60).

6. Procédé d'équilibrage d'un arbre de transmission (22, 28, 30, 32), comprenant les étapes suivantes :
- la prévision d'un arbre de transmission (22, 28, 30, 32) possédant un élément tubulaire (42) muni de deux extrémités et une fourche (44) couplée à chaque extrémité dudit élément tubulaire (42) ;
- l'enlèvement direct de matière d'au moins une desdites fourches (44) ; et
- l'équilibrage du balourd en rotation dudit arbre de transmission (22, 28, 30, 32) par l'intermédiaire dudit enlèvement de matière de ladite au moins une fourche (44).

7. Procédé selon la revendication 6, **caractérisé par** la prévision d'un flasque (60) sur ladite au moins une fourche (44).

8. Procédé selon la revendication 7, **caractérisé par** un enlèvement de matière dudit flasque (60).

9. Procédé selon la revendication 7 ou 8, **caractérisé par** le perçage, le meulage, la découpe ou similaire dudit flasque (60) pour l'enlèvement dudit matériau.
